## Europäisches Patentamt
## European Patent Office
## Office européen des brevets

(19)

(11) Numéro de publication: **0 119 131
B1**

(12) # FASCICULE DE BREVET EUROPÉEN

(45) Date de publication du fascicule du brevet:
**15.10.86**

(51) Int. Cl.⁴: **B 62 D 29/04**

(21) Numéro de dépôt: **84400427.5**

(22) Date de dépôt: **05.03.84**

(54) Eléments de carrosserie composites.

(30) Priorité: **10.03.83 FR 8303922**

(43) Date de publication de la demande:
**19.09.84 Bulletin 84/38**

(45) Mention de la délivrance du brevet:
**15.10.86 Bulletin 86/42**

(84) Etats contractants désignés:
**AT BE DE GB IT SE**

(56) Documents cité:
**CH-A-201 802
FR-A-1 296 103
FR-A-1 567 839
FR-A-2 205 403
FR-A-2 479 123**

(73) Titulaire: **REGIE NATIONALE DES USINES RENAULT, Boîte postale 103 8-10 avenue Emile Zola, F-92109 Boulogne- Billancourt (FR)**

(72) Inventeur: **Goupy, Marcel, 7, avenue de Nancy, F-92210 Saint- Cloud (FR)**

(74) Mandataire: **Réal, Jacques, Régie Nationale des Usines Renault SCE 0804, F-92109 Boulogne Billancourt Cedex (FR)**

## Description

La présente invention se rapporte à des éléments de carrosserie composites constitués de métal et de matières synthétiques.

La réalisation de pièces de carrosserie pour véhicules de transport, telles que des capots, ou des portes en matériaux composites constitués par exemple à l'aide de résines polyesters renforcés de fibres de verre, est proposée en remplacement des tôles d'acier ou d'aluminium actuellement utilisées.

Toutefois, l'emploi de plastiques renforcés présente diverses difficultés, en particulier celles liées à une rigidité insuffisante et à l'aspect de surface moins satisfaisant de ces produits, qui peuvent présenter localement des ondulations, retassures, piqûres, porosités, etc. Ces défauts impliquent des gammes de peinture compliquées et coûteuses pour donner lieu à un aspect comparable à celui de la tôle peinte.

Par ailleurs, on connaît du brevet français 2 479 123 des pièces de carrosserie composites, constituées d'un élément structurel en matière synthétique renforcée de fibres, recouvert d'une pièce métallique n'ayant pour but que d'en améliorer l'aspect. Le premier élément est fabriqué dans un moule chauffé et sous pression, puis un flan métallique lui est solidarisé soit lors du processus de pressage et de durcissement dans le moule, soit lors d'une seconde opération au moyen d'un adhésif. Ce procédé présente l'inconvénient d'être relativement lourd et coûteux, puisqu'il peut nécessiter deux étapes de fabrication.

De plus, il n'exploite pas au maximum la complémentarité des deux matériaux en présence:
- à l'élément en matière plastique les formes compliquées,
- à l'élément en tôle les autres; mais ce dernier pouvant constituer un élément structurel de la pièce, il est inutilement onéreux de le doubler en totalité dans cette fonction par son homologue en matière synthétique.

L'objet de la présente invention concerne une réalisation nouvelle de pièces composites de carrosserie, selon laquelle l'association des éléments métalliques et de matières synthétiques, telle que décrit dans la Revendicaton 1, permet d'utiliser au maximum les possibilités propres à chacun de ces matériaux tout en simplifiant leur procédé de fabrication.

L'invention sera décrite à titre d'exemple non limitatif au regard des figures 1 à 16 ci-jointes qui se rapportent respectivement:
- figure 1: à une vue de dessous d'un capot avant de véhicule automobile selon l'invention;
- la figure 2: à une coupe du capot selon l'axe BB de la figure 1;
- la figure 3: à une coupe analogue selon l'axe AA;
- la figure 4: à une coupe partielle analogue à la précédente d'une variante de l'invention;
- la figure 5: à une vue de face d'un hayon arrière de véhicule automobile selon l'invention;
- la figure 6: à une coupe du hayon selon l'axe AA de la figure précédente;
- les figures 7 et 8: à une coupe du hayon selon l'axe BB de la figure 5, montrant deux réalisations différentes des nervures de renforcement;
- les figures 9 et 10: à deux vues analogues aux précédentes de variantes montrant la mise en oeuvre d'un premier moyen de rigidification du hayon;
- les figures 11 et 12: à deux vues analogues montrant la mise en oeuvre d'un second moyen de rigidification;
- les figures 13 à 16: à une coupe de variantes de réalisations de l'invention montrant la possibilité de fixer un vitrage au cours de l'opération de surmoulage.

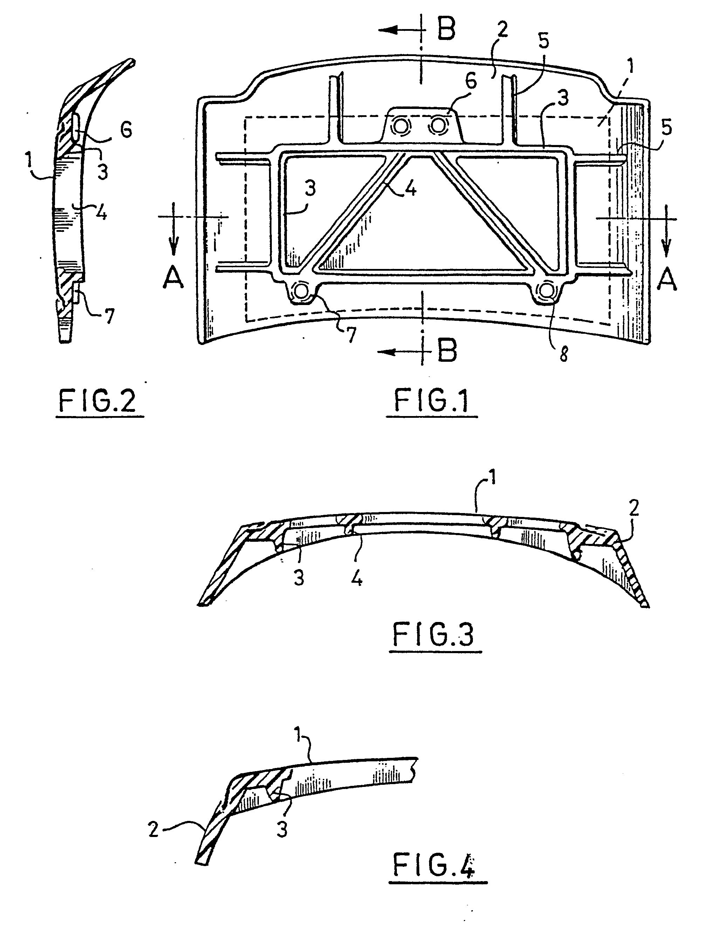

En référence aux figures 1 à 3, on voit que le capot avant de véhicule qui y est représenté comporte essentiellement une zone centrale 1 métallique et une zone complémentaire 2 en matière synthétique surmoulée. La zone centrale 1 est constituée de une ou plusieurs pièces en tôle dessinées de manière à être peu coûteuses à fabriquer (emboutis faciles à réaliser, forme de flans donnant lieu à de faibles chutes, etc.).

Les parties en tôle emboutie peuvent être réalisées avec des tôles d'acier, par exemple, préprotégées ou non, perforées ou non sur leur périphérie et, suivant nécessité, revêtues de primaires d'adhérence sur les parties qui seront surmoulées afin d'obtenir une bonne solidarisation entre la tôle et la matière synthétique surmoulée. Les primaires retenus peuvent être à base de polyuréthanne ou de polyester comme il est généralement connu.

L'emploi de tôle préprotégée peut permettre l'adoption d'une gamme de peinture simplifiée comportant l'application générale d'une laque, précédée ou non d'un sealer ou d'un apprêt pour conférer l'adhérence sur plastique. Il est ainsi possible d'obtenir une présentation unifiée en teinte.

La zone complémentaire 2 en matière synthétique est surmoulée sur la pièce centrale 1 considérée comme un insert qui lui est ainsi solidarisée; on profite de cette opération pour faire simultanément venir de moulage diverses nervures de rigidification 3 à 5 situées sur la face postérieure du capot, ainsi que des bossages ou des éléments de fixation de serrure 6, ou encore des pièces d'articulation de capot 7-8, des embases defixation d'équilibreurs, etc. comportant de moulage les trous, filetés ou non, nécessaires à la fixation ultérieure de pièces complémentaires.

La matière synthétique retenue pour le surmoulage sera, de préférence, choisie parmi des produits sans retrait, ou à faible retrait, et on peut indiquer, à titre d'exemple non limitatif, des matériaux tels que des résines polyesters comportant une phase thermoplastique, renforcées de fibres de verre, connues en général sous le terme de résines renforcées "Low Profile". On peut citer aussi les résines epoxydes renforcées de fibres et des thermoplastiques renforcés, tels que polyesters thermoplastiques (polyethylène ou Polybutylène Téréphtalate: PET ou PBT), Polyamides chargés ou non, Polycarbonates, Polyacétals, etc.

Dans un mode de réalisation préféré de l'invention, ces plastiques sont surmoulés par injection, qu'ils soient à base thermoplastique ou thermodurcissable. Dans ce dernier cas toutefois, il n'est pas exclu de les mettre en oeuvre par compression ou transfert.

Une différenciation d'aspect peut être réalisée sur cette pièce de carrosserie entre la zone métallique et le pourtour en matière synthétique. Ce dernier peut être de couleur et d'aspect de surface différents. On pourra ainsi conserver des parties lisses au niveau des emboutis en tôle et en réaliser des surfaces grénées pour les parties extérieures en matière plastique surmoulée, ce qui est plus avantageux que de chercher à leur conférer un aspect lisse et brillant susceptible de révéler des défauts, malgré le surcroît de travail qui en découle.

Les figures 3 et 4 montrent deux modes de fixation possibles de la matière synthétique périphérique 2 à l'élément centrale en tôle 1. Dans le premier cas, la liaison s'effectue sur des bordures de la pièce 1 sensiblement dans le prolongement horizontal de celle-ci, tandis que dans le second cas, les bords de la tôle reviennent en arrière sensiblement perpendiculairement à la façade de la pièce. Cette fixation peut être facilitée en créant des trous dans la tôle, donnant lieu à des rivets de matière après l'opération d'injection, ou par tout traitement de surface déjà connu favorisant cette adhérisation.

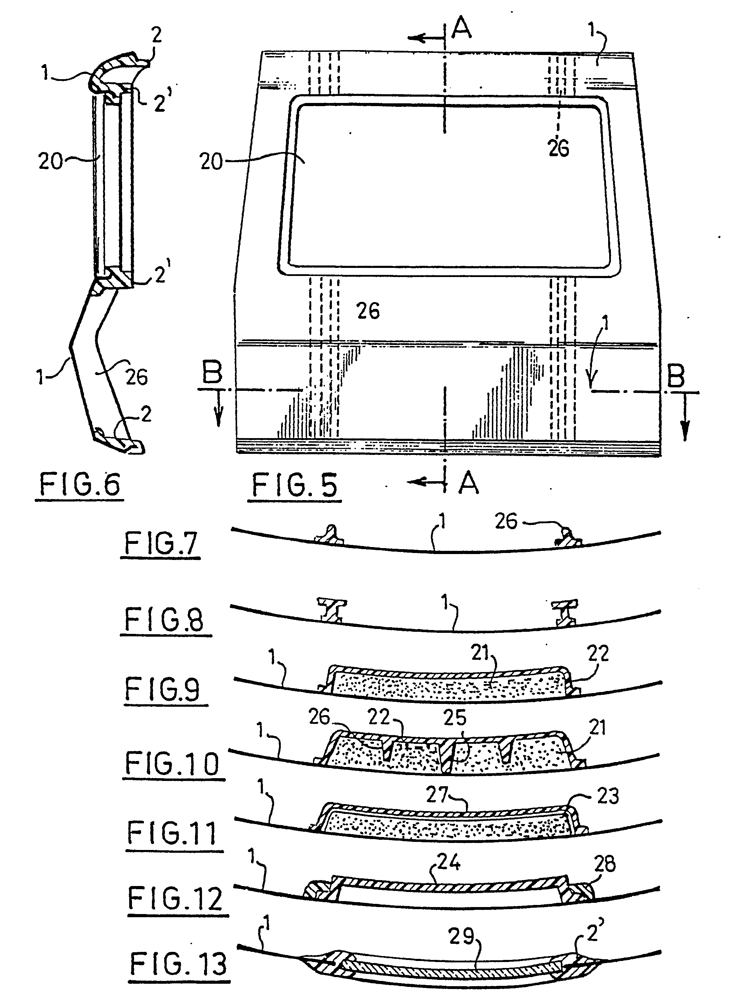

Un autre exemple de réalisation de l'invention est illustré à la figure 5, qui représente un hayon arrière de véhicule automobile.

On retrouve comme à la figure 1 la zone métallique 1, résultant d'une simple opération d'emboutissage et la bordure 2 en matériau synthétique qui entoure également en 2' la partie centrale évidée dans laquelle sera disposée la glace 20. Comme dans le cas précédent, des nervures de renfort, de différente section (droite, à la figure 7; en I, à la figure 8) sont venues de moulage.

Cependant, on améliore sensiblement la rigidité en flexion et en torsion de la pièce, en disposant le plus loin possible de sa fibre neutre sur l'insert en tôle 1, un noyau cellulaire 21 ou un noyau creux 23 - 24, fixé par des moyens temporaires tels qu'un adhésif, et définitivement solidarisé lors du surmoulage par injection de la bordure 2.

Ce noyau 21 est prévu à des dimensions inférieures à la cavité correspondante du moule de telle sorte que, lors de l'opération de surmoulage, une partie de la matière surmoulé enrobe le noyau creux ou expansé, de manière à former un caisson solidaire de l'insert en tôle, lui conférant ainsi une grande rigidité.

On obtient ainsi une structure sandwich visible à la figure 9. Le noyau 21 peut être réalisé par exemple en polyurethanne expansé, en matière phénolique expansée ou tout autre matériau allégé.

Lorsqu'on emploie un noyau cellulaire, selon les différences de formes et de dimensions réalisées entre ce noyau et la cavité correspondante de l'outillage de surmoulage, on peut obtenir à volonté des différences d'épaisseur, des nervures 26 ou des parties qui rejoignent localement l'insert pour constituer des "rivets matière" 25 solidarisant l'insert en tôle 1 avec le panneau surmoulé 22 qui forme la structure sandwich (figure 10).

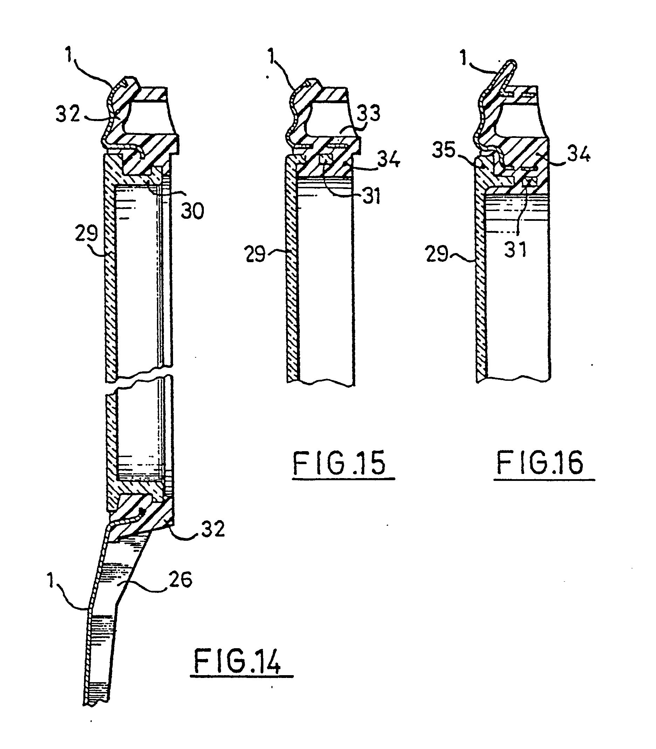

Lorsqu'on emploie un noyau creux tel que 23 - 24 des figures 11 et 12, ce dernier peut être constitué de tôle 23 ou de polyester renforcé 24. Dans le premier cas, il est solidarisé à l'insert 1 lors du surmoulage du caisson 27.

Dans le second cas, le matériau constituant le corps creux 24 pouvant transmettre les efforts, la solidarisation lors du surmoulage n'est effectuée que par la création d'une bordure 28.

Selon la variante des figures 13 à 16, on profite de l'opération d'injection créant la bordure 2' de l'emplacement 20 de la glace découpée dans la zone métallique 1, pour solidariser la glace 29 à l'ensemble 1 - 2'.

La glace 29 est préférentiellement en polycarbonate ou polyméthacrylate, protégée ou non par un vernis et se trouve disposée avec l'insert 1 dans le moule avant l'opération de surmoulage. Ces matières permettent la réalisation des parties périphériques avec un retour 30 en contre dépouille (figure 14) ou avec un retour 31 percé de trous d'ancrage utilisés lors du surmoulage de la bordure 32 généralement en polyester (figures 15 et 16).

L'insert en tôle 1 peut également comporter sur au moins l'un de ses rebords des trous 33 permettant sa solidarisation à la bordure 34 produite par surmoulage. Dans le cas de la figure 16, on notera encore la conformation complémentaire de la zone périphérique 35 de la glace 29 et de la bordure inférieure de l'insert 1.

Naturellement, le procédé de l'invention pourrait être appliqué à la fabrication d'autres éléments de carrosserie que des capots ou des hayons, qu'ils soient extérieurs, tels que des ailes des capots ou des portes, ou qu'ils soient intérieurs, tels que des planchers ou des tabliers par exemple. Dans ce dernier cas en particulier, il est prévu, à l'aide des procédés décrits, de surmouler sur un support en tôle formant l'insert, selon les endroits où on le désire, des parties d'éléments de chauffage, des supports d'instruments, de câblages, des arrêts de gaines, des paliers de passage de commandes et d'apporter des fonctions d'insonorisation, soit par la matière rapportée par surmoulage sur la tôle, soit en l'utilisant pour enrober des produits insonorisants en plaques appliqués au préalable sur le support.

## Revendications

1. Elément de carrosserie composite obtenu par solidarisation lors de l'opération de moulage d'une pièce métallique préformée et de matière synthétique renforcée, caractérisé par le fait qu'il comporte une zône centrale constituée par au moins une pièce en tôle (1) de forme simple, à fonctions structurelle et décorative, et des zônes complémentaires obtenues par surmoulage de la matière synthétique (2) de formes plus compliquées, intégrant le cas échéant des éléments divers tels que des pièces d'articulation, de serrure, des nervures de raidissement, des renforts, des bossages.

2. Elément de carrosserie selon la revendication 1, caractérisé en ce que les parties de la pièce en tôle (1), qui sont solidarisées aux zônes complémentaires (2) en matière synthétique, sont traitées de façon à améliorer l'adhérisation entre ces deux pièces, notamment par un traitement de surface connu en soi, ou par la création dans la tôle (1) de trous donnant naissance lors du surmoulage à des rivets de matière synthétique.

3. Elément de carrosserie selon la revendication 1, caractérisé en ce que les zônes complémentaires (2) et les elements divers venus de moulage avec elle sont surmoulés par injection ou transfert de polymères à faible retrait renforcés de fibres.

4. Elément de carrosserie selon la revendication 1, caractérisé en ce que ledit élément à son stade final présente une zône centrale (1) en tôle dont l'aspect est lisse et brillant, contrastant avec les zônes complémentaires (2) en matière synthétique dont l'aspect est gréné.

5. Elément de carrosserie selon la revendication 1, caractérisé en ce que sa rigidité est complétée par surmoulage sur la face interne de la zône centrale en tôle (1), de matière synthétique enrobant un noyau en matériau du type polyuréthanne expansé (21), fixé avant le surmoulage par tout moyen temporaire connu, à distance de la fibre neutre dudit élément.

6. Elément de carrosserie selon la revendication 5, caractérisé en ce que le noyau en matière expansé comporte des parties en dépression permettant, lors du surmoulage de la matière synthétique, la formation des nervures (26) ou des zônes de jonction (25) avec la tôle (1).

7. Elément de carrosserie selon la revendication 1, caractérisé en ce que sa rigidité est améliorée par surmoulage sur la face interne de la zône centrale en tôle (1), de matière synthétique enrobant au moins partiellement un noyau creux (23-24), fixé avant le surmoulage par tout moyen temporaire connu, à distance de la fibre neutre dudit élément.

8. Elément de carrosserie selon la revendication 1, caractérisé en ce que l'on profite de l'opération de surmoulage des zônes complémentaires (2) pour conformer simultanément certains organes annexes complémentaires tels que des éléments de chauffage, des supports d'instruments, de câblage et des produits d'insonorisation.

9. Elément de carrosserie selon la revendication 1, caractérisé en ce que l'opération de surmoulage des zônes complémentaires (2) est utilisée pour la solidarisation d'une glace (29) préalablement positionnée dans une découpe correspondante (20) de la pièce en tôle (1).

10. Elément de carrosserie selon la revendication 9, caractérisé en ce que la glace (29) est en une matière synthétique du type polycarbonate, le cas échéant protégé par un vernis, et que ses parties complémentaire présentent une forme et une structure facilitant sa solidarisation avec la matière surmoulée.

11. Elément de carrosserie selon la revendication 10, caractérisé en ce que le rebord de l'ouverture (20) de la pièce en tôle (1) déterminant l'emplacement de la glace (29) présente une forme et une structure facilitant sa solidarisation avec la matière surmoulée.

## Patentansprüche

1. Zusammengesetztes Karosserieteil, das durch Verbinden während des Gießvorgangs eines vorgeformten Metallteils mit verstärktem Kunststoff entsteht, dadurch gekennzeichnet, daß es einen zentralen Bereich aufweist, der aus wenigstens einem einfach geformten Blechteil (1) besteht, mit struktureller und dekorativer Aufgabe, sowie zusätzliche Bereiche aufweist, die durch Übergießen von Kunststoff (2) komplizierterer Formen entstehen, wobei gegebenenfalls verschiedene Teile, wie Gelenkteile, Schließteile, Versteifungsrippen, Verstärkungen und Höcker eingebaut werden.

2. Karosserieteil nach Anspruch 1, dadurch gekennzeichnet, daß diejenigen Bereiche des Blechteils (1), die mit den zusätzlichen Bereichen (2) aus Kunststoff fest verbunden werden, derart behandelt worden sind, daß die Haftung zwischen diesen beiden Teilen verbessert wird, insbesondere mittels einer an und für sich bekannten Oberflächenbehandlung oder durch die Ausbildung von Löchern im Blech (1), so daß während des Übergießens Nieten aus Kunststoff gebildet werden.

3. Karosserieteil nach Anspruch 1, dadurch gekennzeichnet, daß die zusätzlichen Bereiche (2) und die unterschiedlichen beim Gießen hergestellten Teile übergossen werden durch Aufspritzen oder Auftragen von mit Fasern verstärkten Polymeren geringer Schrumpfung.

4. Karosserieteil nach Anspruch 1, dadurch gekennzeichnet, daß das Teil zum Zeitpunkt der Fertigstellung einen zentralen Bereich (1) aus Blech aufweist, dessen Anblick glatt und glänzend ist und mit den zusätzlichen Bereichen (2) aus Kunststoff kontrastiert, deren Aussehen körnig ist.

5. Karosserieteil nach Anspruch 1, dadurch gekennzeichnet, daß seine Steifigkeit vollständig wird durch Übergießen der inneren Fläche des zentralen Bereichs aus Blech (1) mit Kunststoff, der einen Kern umschließt aus einem Material, wie z.B. expandiertes Polyurethan (21), das vor dem Übergießen auf herkömmliche Art befestigt wird im Abstand von der neutralen Faser des Teils.

6. Karosserieteil nach Anspruch 5, dadurch gekennzeichnet, daß der Kern aus expandiertem Material Abschnitte mit Vertiefungen aufweist, so daß beim Übergießen mit Kunststoff Rippen (26) oder Verbindungsabschnitte (25) mit dem Blech (1) ausgebildet werden.

7. Karosserieteil nach Anspruch 1, dadurch gekennzeichnet, daß seine Steifigkeit verbessert wird durch Übergießen der Innenflächen des zentralen Blechbereichs (1) mit Kunststoff, der wenigstens teilweise einen hohlen Kern (23 - 24) umschließt, der vor dem Übergießen in an sich bekannter Weise im Abstand von der neutralen Faser des Teils befestigt ist.

8. Karosserieteil nach Anspruch 1, dadurch gekennzeichnet, daß während des Übergießens der zusätzlichen Bereiche (2) gleichzeitig gewisse Anschlußteile gebildet werden, wie z.B. Heizteile, Halterungen für Instrumente, für die Kabel sowie Dämmprodukte.

9. Bauteil nach Anspruch 1, dadurch gekennzeichnet, daß der Schritt des Übergießens der zusätzlichen Bereiche (2) verwendet wird zur Verbindung einer Scheibe (29), die vorher in eine entsprechende Aussparung (20) des Blechteils (1) eingesetzt worden ist.

10. Karosserieteil nach Anspruch 9, dadurch gekennzeichnet, daß die Scheibe (29) aus einem Kunststoff vom Typ Polykarbonat besteht, gegebenenfalls durch einen Lack geschützt ist und daß ihre komplementären Bereiche eine Form und einen Aufbau aufweisen, daß die Verbindung mit dem übergossenen Material erleichtert wird.

11. Karosserieteil nach Anspruch 10, dadurch gekennzeichnet, daß der Rand der Öffnung (20) des Blechteils (1) der die Aufnahmeöffnung für die Scheibe (29) begrenzt, eine Form und einen Aufbau aufweist, der seine Verbindung mit dem übergossenen Material erleichtert.

**Claims**

1. A composite bodywork element which is produced by joining a preformed metal member and reinforced synthetic material together in the moulding operation, characterised in that it comprises a central zone formed by at least one sheet metal member (1) of simple shape, with structural and decorative functions, and complementary, zones which are produced by moulding thereonto synthetic material (2) in more complicated forms, if appropriate integrating various elements such as pivot mounting and lock members, stiffening ribs, reinforcing means and bosses.

2. A bodywork element according to claim 1 characterised in that the portions of the sheet metal member (1) which are fixed to the complementary zones (2) of synthetic material are treated so as to improve adhesion between said two members, in particular by means of a per se known surface treatment or by creating in the sheet metal (1) holes which, in the moulding operation, give rise to rivet portions of synthetic material.

3. A bodywork element according to claim 1 characterised in that the complementary zones (2) and the various elements which are moulded therewith are moulded in position by the injection or transfer of low-shrinkage, fibre-reinforced polymers.

4. A bodywork element according to claim 1 characterised in that said element in its final stage has a central sheet metal zone (1) which is smooth and shiny in appearance, contrasting with the complementary zones (2) of synthetic material which are of a grainy appearance.

5. A bodywork element according to claim 1 characterised in that the rigidity thereof is completed by moulding over the inside surface of the central sheet metal zone (1) synthetic material encasing a core of material of the expanded polyurethane type (21), which is fixed prior to the moulding operation by any known temporary means, at a spacing from the neutral fibre of said element.

6. A bodywork element according to claim 5 characterised in that the expanded material core comprises depression portions which, when the synthetic material is moulded in position, permit the formation of ribs (26) or zones (25) for joining to the sheet metal (1).

7. A bodywork element according to claim 1 characterised in that the rigidity thereof is improved by moulding over the inside surface of the central sheet metal zone (1), synthetic material which at least partially encases a hollow core (23-24) which is fixed prior to the moulding operation by any known temporary means, at a spacing from the neutral fibre of said element.

8. A bodywork element according to claim 1 characterised in that the operation of moulding the complementary zones (2) is utilised for simultaneously shaping certain complementary ancillary members such as heating elements, supports for instruments and cables and sound-proofing products.

9. A bodywork element according to claim 1 characterised in that the operation of moulding the complementary zones (2) in position is used for fixing a window (29) which has been previously positioned in a corresponding opening (20) in the sheet metal member (1).

10. A bodywork element according to claim 9 characterised in that the window (29) is of synthetic material of the polycarbonate type, if appropriate protected by a varnish, and that the complementary portions thereof are of a shape and a structure that facilitate fixing thereof to the moulded material.

11. A body work element according to claim 10 characterised in that the rim of the opening (20) in the sheet metal member (1) that determines the positioning of the window (29) is of a shape and a structure that facilitate the fixing thereof to the moulded material.

## FIG.2

## FIG.1

## FIG.3

## FIG.4

0 119 131

FIG.6

FIG.5

FIG.7

FIG.8

FIG.9

FIG.10

FIG.11

FIG.12

FIG.13

3

FIG.14

FIG.15

FIG.16